# EUROPEAN PATENT APPLICATION

(11) **EP 1 357 710 A1**
(43) Date of publication of application: **29.10.2003**
(21) Application number: 02252825.1
(22) Date of filing: 23.04.2002
(51) Int. Cl.: H04L 12/56

(54) **A hand-off mechamism**

(71) Applicant: Red-M (Communications) Limited, Wooburn Green, Buckinghamshire HP10 0HH (GB)
(72) Inventor: Harrison, Simon, High Wycombe, Bucks HP13 6EH (GB)
(74) Representative: Finnie, Peter John

(57) **Abstract**

The present invention provides a wireless communications device which supports a software implemented protocol stack, wherein the protocol stack includes a local baseband and an upper stack, and a host control interface (HCI) redirector system which is positioned in the protocol stack between the local baseband and the upper stack, the host control interface redirector system allowing the upper stack to be accessed both from the local baseband and from remote basebands over a network connection.

The invention allows the hand-off of wireless connection using an arbitrary profile without the need to transfer the entire protocol stack from one Access Point to another. It is only the baseband connection that is transferred. The HCI redirector system multiplexes the upper stack between the local baseband and a remote baseband reached through a network connection. The upper protocol stack remains in the same location for the entire duration of the connection and so network traffic does not need to be rerouted to a new network segment or IP address when a connection has been handed-off.

## Description

### Field of the Invention

The present invention relates to wireless communications and in particular to handing-off connections between Access Points within a network which are connected via network connections.

### Background to the Invention

Wireless types of network are now becoming widespread. In particular local environments such as offices and airport lounges are increasing using wireless networks. Local wireless networks of this type typically use short range radio communications. One such short range radio communication system is Bluetooth, which can be used to provide customer premises wireless links for voice, data and multimedia applications.

A Bluetooth Radio Frequency (RF) system is a Fast Frequency Hopping Spread Spectrum (FFHSS) system in which packets are transmitted in regular time slots on frequencies defined by a pseudo random sequence. A Frequency Hopping system provides Bluetooth with resilience against interference. Interference may come from a variety of sources including microwave ovens and other communication systems operating in this unlicensed radio band which can be used freely around the world. The system uses 1MHz frequency hopping steps to switch among 79 frequencies in the 2.4GHz Industrial, Scientific and Medical (ISM) band at 1600 hops per second with each channel using a different hopping sequence.

The Bluetooth baseband architecture includes a Radio Frequency transceiver (RF), a Link Controller (LC) and a Link Manager (LM) implementing the Link Manager Protocol (LMP).

Bluetooth version 1.1 supports asymmetric data rates of up to 721 Kbits per second and 57.6Kbits per second and symmetric data rates of up to 432.5Kbits per second. Data transfers may be over synchronous connections, Bluetooth supports up to three pairs of symmetric synchronous voice channels of 64Kbits per second each.

Bluetooth connections operate in something called a piconet in which several nodes accessing the same channel via a common hopping sequence are connected in a point to multi-point network. The central node of a piconet is called a master that has up to seven active slaves connected to it in a star topology. The bandwidth available within a single piconet is limited by the master, which schedules time to communicate with its various slaves. In addition to the active slaves, devices can be connected to the master in a low power state known as park mode, these parked slaves cannot be active on the channel but remain synchronised to the master and addressable. Having some devices connected in park mode allows more than seven slaves be attached to a master concurrently. The parked slaves access the channel by becoming active slaves, this is regulated by the master.

Multiple piconets with overlapping coverage may co-operate to form a scatternet in which some devices participate in more that one piconet on a time division multiplex basis. These and any other piconets are not time or frequency synchronised, each piconet maintains its own independent master clock and hopping sequence.

The Bluetooth specification has therefore been designed for the primary purpose of allowing electronic devices to wirelessly communicate with each other in a local environment. The system is typically utilized in an environment in which one-to-one communication is achieved between two Bluetooth enabled devices.

Almost any electronic device can be Bluetooth enabled. Common electronic device such as mobile telephones, PDAs, laptops, PCs and printers are increasingly being manufactured so as to be Bluetooth enabled. It is also possible to adapt existing devices to be Bluetooth enabled.

In a Bluetooth system data can be transferred using either a Synchronous Connection-Oriented (SCO) link or an Asynchronous Connection-Less (ACL) link. A SCO link is a symmetric, point-to-point link between a master and a specific slave. The SCO link reserves slots at regular intervals and can therefore be considered as a circuit switched connection between the master and the slave. An SCO link is typically used to support time-bounded information like voice. SCO links are used because they have guaranteed quality of service and it is easy to convert the data to and from audio using a simple hardware device called a codec. Further detail on the nature of SCO links can be found in the Bluetooth specification, available from www.bluetooth.com.

A typical scenario in a Bluetooth wireless network is one in which a mobile Bluetooth device is connected to an access point which is part of a wired network containing other access points. When the mobile device moves out of range of the access point to which it is connected it is necessary to establish a connection with another access point within the wired network. This procedure is called "hand-off".

Hand-off is not yet part of the Bluetooth specification, and the current methods only address hand-off of Personal Area Networking (PAN) profile connections. When handing off an arbitrary profile a number of problems are encountered. In particular, each particular profile is a special case requiring dedicated functionality.

Furthermore, when effecting the hand-off with current technology, it is often necessary that the entire protocol stack is disconnected from one access point and reconnected to another. This causes an end point's application to see momentary loss of service, at which point it may close or signal errors to the user. Disconnecting and reconnecting the entire Bluetooth protocol stack requires a lot of signalling and control traffic making the process unnecessarily prolonged.

In an alternative method, it is possible to seamlessly move the stack context from one access point to another, avoiding the disconnection/reconnection problems, by transferring the entire context of a protocol stack. However, this is technically very difficult and can introduce inefficiencies and extra complexity into the access point stacks.

When profiles that do not terminate the data at the access point connected to, such as a LAN access, dial-up networking and personal area networking network access profiles, traffic originating at one part of the wired network will suddenly move to another part of the network. This means that for switched networks, the switch forwarding tables must quickly be up-dated to direct the relevant traffic to the new access points network segment. For routed networks, it is possible that the hand-off causes the end point to move between subnets and in this case a new IP address would need to be assigned to the end point.

For profiles terminating traffic at the access point, such as OBEX or telephony, movement from one access point to another will mean that the IP address of the profile entity will change, and it will be necessary to redirect any communication destined to the original access point to the second access point. This is not currently possible

It is possible to solve some of the problems noted above by using a single centralised protocol stack on a server unit which implements the stack layer above the host controller interface for each access point in the network. Although this solves many of the discussed hand-off problems it does have two serious side-effects, namely that network scalability is limited by the capacity of the single stack server unit and that network resilience is seriously compromised, as there is one single point of failure for all connection activity.

In summary, current hand-off proposals have two significant drawbacks. The first drawback is that they are limited to certain profiles, specifically the personal area networking (PAN) collection of data only profiles. Secondly, they do not address the problem of the end point device moving its logical point of attachment within the wired network.

### Summary of the Invention

According to a first aspect of the present invention, a wireless communications device supports a software implemented protocol stack, wherein the protocol stack includes a local baseband and an upper stack, and a host control interface (HCI) redirector system which is positioned in the protocol stack between the local baseband and the upper stack, the host control interface redirector system allowing the upper stack to be accessed both from the local baseband and from remote basebands of other communications devices over a network connection.

The present invention allows the hand-off of a wireless connection using an arbitrary profile without the need to transfer the entire protocol stack from one access point to another. It is only the baseband connection that is transferred. The HCI redirector system multiplexes the upper stack between the local baseband and a remote baseband reached through a network connection. The upper protocol stack remains in the same location for the entire duration of the connection and so network traffic does not need to be rerouted to a new network segment or IP address when a connection has been handed-off.

The present invention does not suffer from a limited network scalability based on a central server supporting the upper protocol stack, nor does it suffer from a reduced network resilience. There is no one point of failure within the network.

The present invention not only allows hand-off but also allows a local baseband connection to be slaved to a remote stack.

Preferably, the device is a Bluetooth device. Preferably, the network is a local area network (LAN), but alternatively it could be a wireless local area network or a wide area network.

Preferably, the HCI redirector system maintains aggregate utilisation information so that the local baseband is aware of the currently available capacity for new connections. Preferably, the HCI redirector system arbitrates between conflicting requests from the upper stack and remote upper stacks.

According to a second aspect of the present invention a computer program product comprises software supporting a protocol stack, wherein the protocol stack includes a local baseband and an upper stack, and a host control interface redirector system which is positioned in the protocol stack between the local baseband and the upper stack, the host control interface redirector system allowing the upper stack to be accessed both from the local baseband and from remote basebands over a network connection. The computer program product preferably comprises software embodied on a computer readable medium.

Preferably, the protocol stack is a Bluetooth protocol stack. Preferably, the network is a local area network (LAN), but alternatively it could be a wireless local area network or a wide area network. Preferably, the HCI redirector system maintains aggregate utilisation information so that the local baseband is aware of the currently available capacity for new connections. Preferably, the HCI redirector system arbitrates between conflicting requests from the upper stack and remote upper stacks.

According to a third aspect of the present invention, a wireless communications system includes a plurality of devices according to the first aspect, each device connected to the same network such that the upper stack of one device can be accessed from the baseband of at least some of the other devices.

According to a fourth aspect of the present invention, a method of handing-off a wireless connection between an end point and a first access point from the first access point to a second access point, wherein the first and second access points are connected over a network and both include an upper protocol stack and a baseband, comprises the steps of:
establishing a wireless connection between the end point and the baseband of the second access point;
establishing a connection between the baseband of the second access point and the upper stack of the first access point over the network; and,
running the connection of the end point to the second access point's baseband on the upper protocol stack of the first access point.

Preferably, the method further includes the step of disconnecting the end point from the baseband of the first access point prior to connecting the end point to the baseband of the second access point.

Preferably, the wired network is a local area network, but it may also be a wireless local area network or a wide area network. Preferably, the wireless connections are Bluetooth connections and the protocol stack is a Bluetooth protocol stack.

The connection may be handed-off again from the second access point to a third access point on the network. The end point then connects to the baseband of the third access point and the baseband of the third access point connects to the upper stack of the first access point over the network. The connection between the second access point and the end point is terminated and the second access point plays no further part in the connection.

Furthermore, an access point can support two or more end point connections. Two connections from the baseband of a first access point can be handed-off in different directions, i.e. to different access points, and maintained simultaneously on the upper stack of the original access point.

### Brief Description of the Drawings

An example of the present invention will now be described in detail with reference to the accompanying drawings, in which:
Figure 1 is a schematic representation of a Bluetooth protocol stack according to the prior art;
Figure 2 is a schematic representation of a Bluetooth protocol stack in accordance with the present invention;
Figure 3 shows a typical network scenario to which the present invention is applicable;
Figure 4 shows the protocol stacks of two access points during a hand-off; and,
Figure 5a and 5b shows the communication between layers of the protocol stack before and after hand-off, respectively.

### Detailed Description

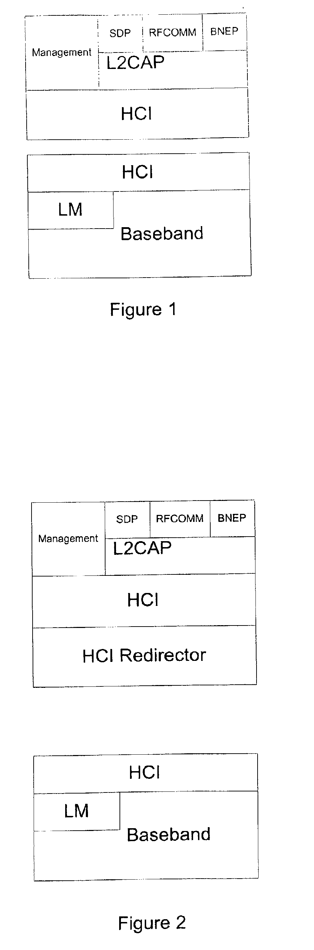

Figure 1 is a simplified, schematic representation of a Bluetooth protocol stack according to the state of the art. The protocol stack includes a baseband portion and an upper protocol stack separated by a host controller interface layer (HCI). The baseband portion comprises Bluetooth hardware, including a radio transceiver, and a Link Manger (LM). The upper protocol stack is embodied in software and includes Logical Link Control and Adaptation Protocol (L2CAP), a management layer, RFCOMM protocol, Bluetooth Network Encapsulation Protocol (BNEP) and Service Discovery Protocol (SDP). It may include further, high level protocols which are not illustrated, such as Internet Protocol (IP) and Point to Point Protocol (PPP).

The Bluetooth protocol stack contains an interface layer known as the host control interface (HCI). In general, this interface marks the physical boundary between the upper stack running on the host processing unit and a lower stack running on the Bluetooth hardware. The boundary consists of a data interface, which transfers two packet classes Asynchronous Connection-Less (ACL) link and Synchronous Connection Oriented (SCO) link packets, and a control interface for initiating connections, performing enquiries, etc.

In accordance with the present invention as represented in Figure 2, the normal Bluetooth stack hierarchy includes an extra entity above the baseband HCI interface and below the HCI driver/L2CAP stack. This entity, called an HCI redirector system, multiplexes the upper stack between the local baseband and a remote baseband reached through a LAN connection. By the same token, it also provides the capability for a local baseband connection to be slaved to a remote stack.

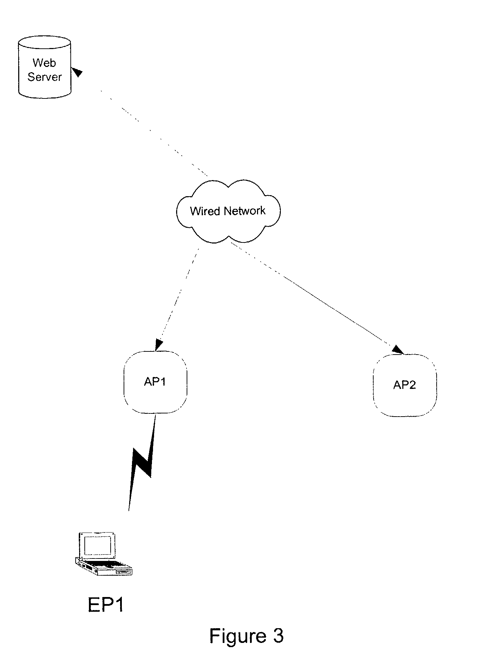

Figure 3 shows a typical network scenario for a Bluetooth network. Access point 1 and Access point 2 are part of the same wired network which also includes a Web Server. Access point 1 provides network connectivity to Bluetooth devices over a first spatial region and Access Point 2 provides network connectivity to Bluetooth devices over a second spatial region adjacent to the first. End point device EP1 is a mobile device connected to AP1 which is roaming the area of Bluetooth network coverage. When EP1 leaves the area covered by AP1 and enters the area covered by AP2 a hand-off occurs. The end point EP1 may be, for example, a PDA or a laptop in an office environment. The Access Points AP1 and AP2 may be Bluetooth Access points, such as Red-M Access Points, available from Red-M (Communications) Limited, UK. The Access points may cover different rooms within the office, such a personal office and a conference room. A user may wish to maintain his connection with the network, for example an Internet connection on his laptop, as he moves from room to room. This requires a hand-off.

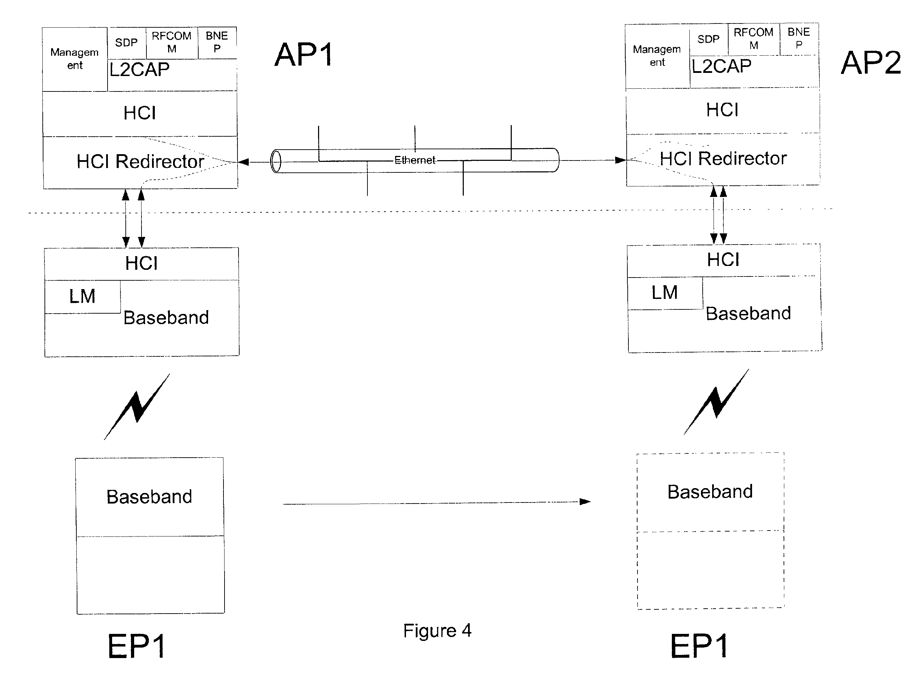

A hand-off mechanism of the present invention will be described with reference to Figure 4. A connection is established in the normal way between EP1 and AP1. It is then determined that a hand-off is required to AP2. Hand-off from AP1 to AP2 is initiated by first disconnecting the lower layers of the Bluetooth stack between EP1 and AP1, specifically the layers below the HCI redirector. The upper stack is not aware of this disconnection. EP1 then forms a baseband connection to AP2, up to AP2's HCI redirector system. AP2's HCI redirector forms a LAN based link back to AP1's HCI redirector system. EP1's connection now runs through AP2's baseband, across to AP1 via the redirector system and into AP1's upper layer stack. The communication continues as before the hand-off. The termination point for any active profiles remains the same so there is no complication, such as readdressing of data packets, arising from the new point of Bluetooth attachment.

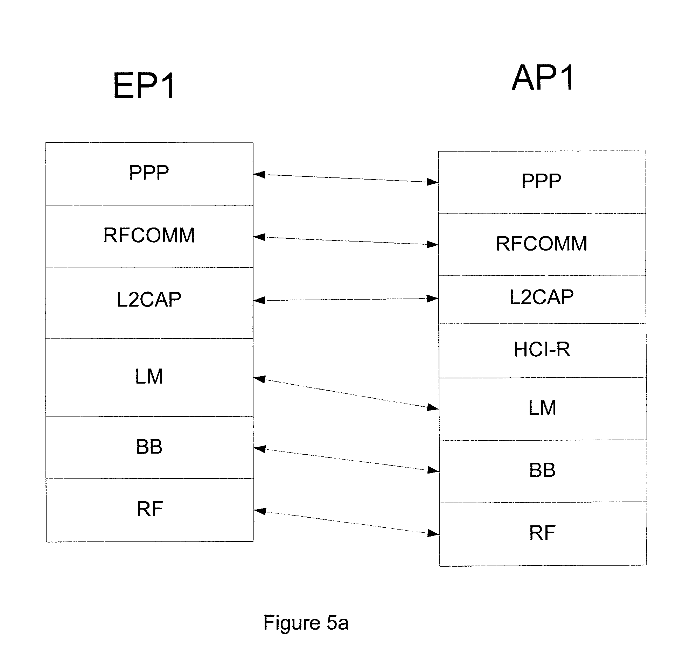

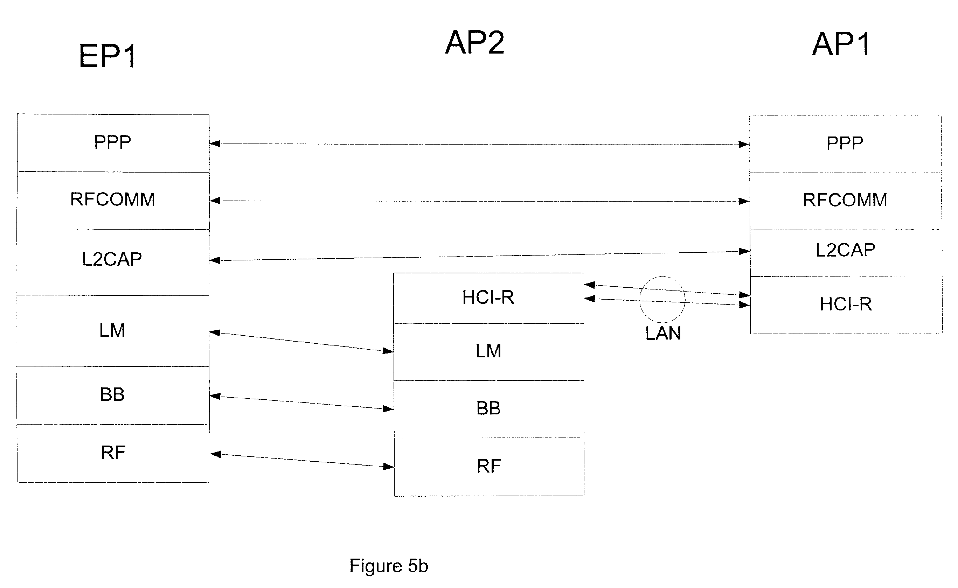

Figure 5a shows the protocol stacks of EP1 and AP1 before hand-off. The protocol components of EP1 are communicating directly with the protocol components of AP2. The upper stack comprises L2CAP, RFCOMM and PPP. The baseband portion comprises RF, BB and LM. Figure 5b shows the situation after hand-off to AP2. The baseband stack connections have moved from AP1 to AP2. The HCI redirector system back-hauls the HCI data via the wired LAN to the original upper stack on AP1. Thus, although the baseband layer disconnects and reconnects, the upper (or host) stack remains unaffected and continues to run on AP1.

In order to facilitate the redirection it is necessary to make some changes to the upper layer stacks in the Access Points. Specifically, the stack must be capable of managing more than the usual seven connection baseband limit, as some of these connections will be on remote basebands. There may be a plurality of connections supported on a single upper stack via a plurality of remote basebands. For example, an access point can support two or more end point connections. Two connections from the baseband of a first Access Point can be handed-off in different directions, i.e. to different Access Points, but those connections are maintained simultaneously on the upper stack of the original Access Point, whilst new connections can be made via the local baseband.

The HCI redirector in-directs all local baseband HCI communication to allow both the local baseband and remote basebands to use its resources. This includes maintaining aggregate utilisation information so that the local baseband is aware of the currently available capacity for new connections, as well as arbitrating between conflicting requests from the local stack and remote stacks.

The connection may subsequently be handed-off to anotherAccess Point. The same procedure is followed with the upper protocol stack remaining supported by the original Access Point AP1 and the baseband of the subsequent Access Point connecting to the HCI redirector system of AP1.

The constraints on the end point EP1 are minimal, in keeping with typical requirements. End points are typically simple Bluetooth devices which can be cheaply mass produced whilst access points in wired networks can be more sophisticated as they are lower volume, infrastructure devices.

The use of an HCI redirector system can be applied to various baseband hand-off techniques. The example given above is one in which the end point is aware that it is changing Access Points, and therefore performs a partial disconnection. However, transparent handoff techniques exist where an end point may be moved between access points without its knowledge. The HCI redirector system removes much of the complexity of such transparent handoff operations.

The technique can equally be applied to voice profiles. When a voice call is handed off from one access point to another, the HCI redirector will route the HCI traffic, including ACL and SCO data back to the initial Access Point. The HCl redirector may choose distinct, appropriate LAN pipes for the different aspects of the HCI traffic, such as a TCP/IP connection for ACL data but an RTP session for the SCO data.

The present invention makes it possible to move a connection with an end point between Access Points quickly and without requiring any special handling of various profiles, without needing to redirect or patch up traffic flowing on the wired network and without compromising scalability and resilience.

The invention has been described with specific reference to Bluetooth devices connected over a LAN. The present invention is not restricted to this implementation. For example, the LAN connections could be wireless LAN connections or Wide Area Network connections. The wireless communications standard need not be Bluetooth, it could for example be DECT or 802.15.

## Claims

1. A wireless communications device which supports a software implemented protocol stack, wherein the protocol stack includes a local baseband and a upper stack, and a host control interface (HCI) redirector system which is positioned in the protocol stack between the local baseband and the upper stack, the host control interface redirector system allowing the upper stack to be accessed both from the local baseband and from remote basebands of other communications devices over a network connection.

2. A wireless communications device according to claim 1, wherein the device is a Bluetooth device.

3. A wireless communications device according to claim 1 or 2, wherein the network is a local area network (LAN), a wireless local area network or a wide area network.

4. A wireless communications device according to claim 1, 2 or 3, wherein the HCI redirector system maintains aggregate utilisation information so that the local baseband is aware of the currently available capacity for new connections.

5. A wireless communications device according to an y preceding claim, wherein the HCI redirector system arbitrates between conflicting requests from the upper stack and remote upper stacks.

6. A computer program product comprising software supporting a protocol stack, wherein the protocol stack includes a local baseband and an upper stack, and a host control interface redirector system which is positioned in the protocol stack between the local baseband and the upper stack, the host control interface (HCI) redirector system allowing the upper stack to be accessed both from the local baseband and from remote basebands over a network connection.

7. A computer program product according to claim 6, wherein the software is embodied on a computer readable medium.

8. A computer program product according to claim 6 or 7, wherein the protocol stack is a Bluetooth protocol stack.

9. A computer program product according to claim 6, 7 or 8, wherein the network is a local area network (LAN), a wireless local area network or a wide area network.

10. A computer program product according to an y one of claims 6 to 9, wherein the HCI redirector system maintains aggregate utilisation information so that the local baseband is aware of the currently available capacity for new connections.

11. A computer program product according to an y one of claims 6 to 10, wherein the HCI redirector system arbitrates between conflicting requests from the upper stack and remote upper stacks.

12. A wireless communications system including a plurality of devices according to any one of claims 1 to 5, wherein each device is connected to the same network such that the upper stack of one device can be accessed from the baseband of at least some of the other devices.

13. A method of handing-off a wireless connection between an end point and a first access point from the first access point to a second access point, wherein the first and second access points are connected over a network and both include an upper protocol stack and a baseband, comprising the steps of:
establishing a wireless connection between the end point and the baseband of the second access point;
establishing a connection between the baseband of the second access point and the upper stack of the first access point over the network; and,
running the connection of the end point to the second access point's baseband on the upper protocol stack of the first access point.

14. A method according to claim 13, further including the step of disconnecting the end point from the baseband of the first access point prior to connecting the end point to the baseband of the second access point.

15. A method according to claim 13 or 14, wherein the wired network is a local area network, a wireless local area network or a wide area network.

16. A method according to claim 13, 14 or 15, wherein the wireless connections are Bluetooth connections and the protocol stack is a Bluetooth protocol stack.
